(19) Europäisches Patentamt / European Patent Office / Office européen des brevets

(11) **EP 4 275 855 A1**

(12) # EUROPÄISCHE PATENTANMELDUNG

(43) Veröffentlichungstag:
**15.11.2023  Patentblatt 2023/46**

(21) Anmeldenummer: **22172695.3**

(22) Anmeldetag: **11.05.2022**

(51) Internationale Patentklassifikation (IPC):
**B28D 1/04** (2006.01)     **B23D 65/00** (2006.01)
**G06F 30/20** (2020.01)     **B23D 59/00** (2006.01)

(52) Gemeinsame Patentklassifikation (CPC):
**B28D 1/041; G06F 30/20**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Hilti Aktiengesellschaft**
**9494 Schaan (LI)**

(72) Erfinder:
• **Peters, Carsten**
  **9468 Sax (CH)**
• **Marra Araujo, Lucas**
  **8952 Schlieren (CH)**
• **Stracke, Jens**
  **6800 Feldkirch (AT)**

• **Abu Antoun, Chafic**
  **9470 Buchs (CH)**
• **Klein, Thorsten**
  **9436 Balgach (CH)**
• **Mandl, Franz**
  **6800 Feldkirch (AT)**
• **Moseley, Steven**
  **6820 Nenzing-Gurtis (AT)**
• **Wegener, Konrad**
  **73033 Göppingen (DE)**
• **Kuffa, Michael**
  **8049 Zürich (CH)**
• **Fabbro, Stefan**
  **9473 Gams (CH)**

(74) Vertreter: **Hilti Aktiengesellschaft**
**Corporate Intellectual Property**
**Feldkircherstrasse 100**
**Postfach 333**
**9494 Schaan (LI)**

(54) **VERFAHREN ZUR HERSTELLUNG EINES BOHRSEGMENTS, BOHRSEGMENT UND BOHRKRONE**

(57)    Die Erfindung betrifft ein Verfahren (100) zur Herstellung eines Bohrsegments (16) für eine Bohrkrone (10), insbesondere für eine Bohrkrone (10) zur Bearbeitung von Stahlbeton, wobei das Bohrsegment (16) wenigstens eine Schicht (24) mit einer Vielzahl von Abrasivpartikeln (22) aufweist, wobei die Abrasivpartikel (22) ein Muster innerhalb der Schicht (24) bilden. Es ist dadurch gekennzeichnet, dass zunächst wenigstens ein Leistungskennwert des das Muster aufweisenden Bohrsegments (16) vorausberechnet wird und / oder das Muster in Abhängigkeit von einer Vorausrechnung des Leistungskennwerts bestimmt wird und, insbesondere, falls der Leistungskennwert ein bestimmtes Maß erreicht oder überschreitet, ein Bohrsegment (16), welches wenigstens eine Schicht (24) mit dem Muster entsprechend angeordneten Abrasivpartikeln (22) aufweist, hergestellt wird. Ferner betrifft die Erfindung ein Bohrsegment (16) sowie eine Bohrkrone (10). Die Erfindung ermöglicht eine schnelle, kostengünstige Entwicklung und Herstellung besonders leistungsfähiger Bohrsegmente (16) für Bohrkronen (10).

Fig. 2

EP 4 275 855 A1

**Beschreibung**

Die Erfindung geht aus von einem Verfahren zur Herstellung eines Bohrsegments für eine Bohrkrone, wobei das Bohrsegment wenigstens eine Schicht mit einer Vielzahl von Abrasivpartikeln aufweist, wobei die Abrasivpartikel ein Muster innerhalb der Schicht bilden.

Leistungskennwerte, beispielsweise Lebensdauer und Bohrleistung, von Abrasivpartikel-bestückten Bohrsegmenten wie beispielsweise Diamantbohrsegmenten können wesentlich durch die Anordnung der in ihnen enthaltenen Abrasivpartikel, insbesondere Diamanten, bestimmt sein.

Die Suche nach Bohrsegmenten mit günstigen Leistungskennwerten gestaltet sich jedoch oftmals schwierig, insbesondere wenn in Hinblick auf mehrere Leistungskennwerte zu optimieren ist. Zusammenhänge zwischen verschiedenen Leistungskennwerten und der Gestaltung des Musters sind oftmals sehr komplex, sodass es bei konventioneller Entwicklung einer Vielzahl von Versuchsreihen mit entsprechend ungünstigen zeitlichen Aufwänden und Kosten bedarf und trotzdem eine Unsicherheit darüber verbleibt, ob ein getestetes Bohrsegment tatsächlich überhaupt verbesserte und effizientere Leistungskennwerte zeigt.

Aufgabe der vorliegenden Erfindung ist es daher, ein Verfahren zur raschen und kostengünstigen Herstellung, insbesondere Entwicklung, eines Bohrsegments sowie ein kostengünstiges Bohrsegment für eine Bohrkrone anzubieten, das ein Kernbohren mit besonders günstigen Leistungskennwerten ermöglicht.

Gelöst wird die Aufgabe durch ein **Verfahren zur Herstellung** eines Bohrsegments für eine Bohrkrone, wobei das Bohrsegment wenigstens eine Schicht mit einer Vielzahl von Abrasivpartikeln aufweist, wobei die Abrasivpartikel ein Muster innerhalb der Schicht bilden, wobei zunächst wenigstens ein Leistungskennwert des das Muster aufweisenden Bohrsegments vorausberechnet wird und / oder das Muster in Abhängigkeit von einer Vorausrechnung des Leistungskennwerts bestimmt wird und ein Bohrsegment, welches wenigstens eine Schicht mit dem Muster entsprechend angeordneten Abrasivpartikeln aufweist, hergestellt wird.

Insbesondere kann das das Muster aufweisende Bohrsegment hergestellt werden, wenn der Leistungskennwert ein bestimmtes Maß erreicht oder überschreitet.

Denkbar ist somit, dass unter mehreren möglichen Mustern und / oder Bohrsegmenten mit solchen Mustern wenigstens ein Bohrsegment zur Herstellung anhand des Leistungskennwerts ausgewählt wird.

Dabei kann die Schicht auch physisch von benachbarten Bereichen des Bohrsegments unterscheidbar und / oder trennbar sein. Die Schicht kann alternativ auch lediglich virtuell ausgebildet sein; es kann sich beispielsweise um eine Schnittebene handeln.

Die Schicht kann eben sein. Alternativ kann sie jedoch auch nicht-eben sein. Insbesondere kann die Schicht bei einem fertig hergestellten Bohrsegment nicht-eben, insbesondere aus einer Ebene heraus deformiert verlaufen.

Durch die Vorausrechnung des Leistungskennwerts können aufwändige Testreihen mit individuell hergestellten Bohrsegmenten und anschließender Messung des Leistungskennwerts entfallen. Hierdurch können Kosten und / oder Zeit eingespart werden. Mit der Durchführung der Testreihen verbundene Gefahren können verringert oder gänzlich vermieden werden.

Das Muster kann wenigstens zwei identische oder zumindest im Wesentlichen identische Teilbereiche aufweisen, die voneinander beabstandet sind. Insbesondere kann sich zwischen den beiden Teilbereichen ein, beispielsweise rechteckiger, partikelfreier Bereich befinden. Dies kann den Leistungskennwert, beispielsweise eine Abtragleistung und / oder ein Verschleißverhalten des Bohrsegments, verbessern.

Die Vorausberechnung kann ein Verhalten und / oder eine Veränderung wenigstens eines Partikels, des Musters und / oder des Bohrsegments berücksichtigen. Sie kann allgemein auf Merkmalen des Bohrsegments oder eines Teils hiervon basieren. Alternativ oder ergänzend kann auch eine Veränderung eines durch das Bohrsegment zu bearbeitenden Werkstücks, das aus wenigstens einem Material ausgebildet ist, vorausberechnet werden. Beispielsweise kann eine Schnitttiefe, eine Abtragungstiefe pro Umdrehung, ein Abrieb, eine Verformung oder dergleichen vorausberechnet werden.

Dabei kann das der Vorausberechnung zugrunde gelegte und / oder zu bearbeitende Werkstück wenigstens zwei Materialien, insbesondere ein Gestein, beispielsweise ein Gestein aus wenigstens zwei verschiedenen Grundstoffen, und ein Metall, aufweisen. Es kann beispielsweise armierten, insbesondere Stahl-armierten, Beton umfassen. Weist das Werkstück mehrere Materialien auf, insbesondere, wenn für jedes der Materialien eigene Versuchsreihen notwendig wären, kann sich eine besonders umfangreiche Reduktion des Zeitaufwands und / oder des Kostenaufwandes aufgrund der Vorausberechnungen ergeben.

Allgemein kann somit die Vorausberechnung auf Basis eines physikalischen Modells erfolgen. Das physikalische Modell kann dabei physikalische und / oder chemische Gesetzmäßigkeiten zumindest näherungsweise abbilden.

Insbesondere, wenn Leistungskennwerte für eine Vielzahl von Mustern vorausberechnet werden sollen, bietet sich folgendes Vorgehen an:
Zunächst werden für eine begrenzte Anzahl von gewünschten Mustern Leistungskennwerte, beispielsweise auf Basis eines physikalischen Modells und / oder auf Basis von früheren Messergebnissen, vorausberechnet.

Anschließend kann mit den gewonnenen Daten ein angepasstes Modell trainiert werden. Das angepasste Modell kann beispielsweise ein maschinell-lernendes Modul aufweisen.

Das maschinell-lernende Modul kann dann anhand der Muster und der sich ergebenden Leistungskennwerte trainiert werden. Dabei kann das Training anhand von experimentell gewonnenen Daten, anhand mittels des physikalischen Modells gewonnenen Daten und / oder einer Kombination solcher Datenquellen trainiert werden.

Nachfolgend können dann weitere Leistungskennwerte für weitere Muster mit Hilfe des angepassten Modells bzw. des - nunmehr trainierten - maschinell-lernenden Moduls vorausberechnet werden.

Das maschinell-lernende Modul kann beispielsweise ein Modul zur Ausführung von probabilistischen, insbesondere linearen, Regressionen sein und / oder aufweisen. Durch die probabilistische Ausgestaltung des Moduls können auch statistische Effekte, beispielsweise eine individuelle Lage der Abrasivpartikel, zumindest partiell berücksichtigt werden.

Mit den vorangehend beschriebenen Varianten des Verfahrens kann es somit gelingen, auf Basis bestimmter Muster zu Leistungskennwerten zu gelangen und die Muster anhand der Leistungskennwerte einzustufen.

Bei einer Klasse von Verfahren kann vorgesehen sein, auf Basis einer Optimierungsrechnung ein Optimum des Leistungskennwertes und / oder ein zu dem Optimum des Leistungskennwertes zugehöriges Muster zu bestimmen. Somit kann ein optimierter Leistungskennwert gesucht und auf ein dazugehöriges Muster zurückgeschlossen werden.

Die Optimierungsrechnung kann anhand des physikalischen Modells erfolgen. Berechnungen auf Basis eines physikalischen Modell können sehr rechenintensiv sein. Daher können eine erhebliche Beschleunigung und eine erhebliche Senkung des Ressourcenbedarfs erreicht werden, wenn die Optimierungsrechnung anhand des angepassten Modells erfolgt.

Die Optimierungsrechnung kann eingerichtet sein, ein globales Optimum zu suchen. Sie kann beispielsweise einen genetischen Algorithmus und / oder einen Partikelschwarm verwenden.

Die Optimierungsrechnung kann Randbedingungen berücksichtigen.

Es kann eine Domänenadaption, beispielsweise auf Basis von Simulationsdaten, insbesondere anhand der Vorausrechnung gewonnen, und / oder auf Basis experimentell gewonnener Daten erfolgen.

Ist durch die vorangehenden Weisen eine im Hinblick auf den Leistungskennwert günstige Bohrkrone identifiziert worden, kann das Bohrsegment mit dem Muster in verkörperter Form produziert werden. Dazu können mehrere, insbesondere gleichartige, Schichten übereinander stapelbar sein. Denkbar ist insbesondere, dass in einem Schritt mehrere Schichten aneinandergereiht, insbesondere gestapelt, werden, um das Bohrsegment oder einen Rohkörper des Bohrsegments zu bilden. Dann kann durch schichtweise gestapelte Ausbildung und / oder Anordnung von Schichten des identischen oder zumindest im Wesentlichen identischen Musters ein Bohrsegment hergestellt werden. Das Bohrsegment kann anschließend wärmebehandelt, z. B. gesintert, werden. Es kann unter Druck gesetzt werden, z. B. per hot isotropic pressing.

Die Stapelung kann deckungsgleich erfolgen; wenigstens eine Schicht kann auch zu einer benachbarten Schicht versetzt angeordnet und / oder ausgebildet sein; eine sich hieraus ergebende Schichtstruktur kann, insbesondere nach einer Pressung, nicht-eben verlaufen.

Im Hinblick auf den Leistungskennwert ist denkbar, dass dieser wenigstens einen Verschleißkennwert umfasst.

Alternativ oder ergänzend ist denkbar, dass der wenigstens eine Leistungskennwert einen Schneidleistungskennwert umfasst.

Von besonderem Interesse können Bohrsegmente sowie das Verfahren zur Herstellung eines solchen sein, wenn die Abrasivpartikel Kohlenstoff, insbesondere Diamant, Graphen und / oder Kohlenstoffnanoröhren, beispielsweise in Form von Aggregierten Diamant-Nanostäbchen und / oder Graphen, Wolframkarbid, Wolframborid und / oder ein Bornitrid aufweisen. Bei den Bohrsegmenten kann es sich somit insbesondere um Diamantbohrsegmente handeln.

In den Rahmen der Erfindung fällt des Weiteren **ein Bohrsegment,** das nach dem vorangehend beschriebenen Verfahren hergestellt ist. Das Bohrsegment kann für den Einsatz an einer Bohrkrone ausgebildet sein.

Es kann ein Bindermaterial aufweisen. In das Bindermaterial können die Abrasivpartikel aufgenommen sein. Das Bindermaterial kann die Abrasivpartikel zumindest teilweise umgeben.

Das Bindermaterial kann eine geringere Härte und / oder eine geringere Bruchfestigkeit aufweisen als das Material der Abrasivpartikel.

Das Bohrsegment, insbesondere das Bindermaterial, kann druck- und / oder wärmebehandelt sein. Es kann insbesondere ein Sinterkörper sein und / oder einen solchen umfassen.

Das Bohrsegment kann quaderförmig oder zumindest im Wesentlichen quaderförmig ausgebildet sein. Es kann alternativ zylindersegmentförmig oder zumindest im Wesentlichen zylindersegmentförmig ausgebildet sein. "Im Wesentlichen" kann dabei insbesondere auch solche Fälle umfassen, bei denen weniger als die Hälfte der Seiten des Bohrsegments von der jeweiligen Grundform, also quaderförmig oder zylindersegmentförmig, abweichen. Beispielsweise kann eine Seite, mit der das Bohrsegment vorrangig mit einem Werkstück in Kontakt treten soll, eine Erhebung aufweisen. Die Erhebung kann beispielsweise eine Schneidkante des Bohrsegments bilden.

Das Bohrsegment kann eine Schichtstruktur aufweisen. Innerhalb einer Schicht können Abrasivpartikel angeordnet sein. Die Anordnung der Abrasivpartikel innerhalb der Schicht kann ein Muster bilden. Benachbarte Schichten können das gleiche Muster aufweisen. Benachbarte Schichten können deckungsgleich oder - alternativ und besonders bevorzugt - zueinander versetzt angeordnet sein.

Die Schichten können deformiert, insbesondere nicht-eben, verlaufen.

Eine weitgehend konstante Schneidleistung lässt sich erreichen, wenn entsprechende Abrasivpartikel in wenigstens zwei Schichten mit dem gleichen Muster die gleiche Orientierung oder Lage aufweisen.

Eine besonders kostengünstige Herstellung lässt sich erreichen, wenn die Abrasivpartikel beliebig, insbesondere entsprechend einer zufälligen Zusammenstellung entsprechend, angeordnet sind.

Die Bohrsegmente, insbesondere die Schichten, können schichtweise mit Hilfe von, insbesondere individuell befüllten, Formen ausgebildet werden.

Bei dem Bohrsegment können die Abrasivpartikel in wenigstens einer Schicht entsprechend einem Muster aus wenigstens zwei voneinander beabstandeten Teilbereichen ausgebildet sein. Die wenigstens zwei Teilbereiche können identische Teilmuster, jeweils gebildet aus den jedem Teilbereich zugehörigen Abrasivpartikeln, aufweisen.

Wenigstens einer der Teilbereiche kann wenigstens eine polygone, insbesondere eine dreieckige und / oder eine viereckige, Anordnung von Abrasivpartikeln aufweisen. Bei einem solchen Teilbereich kann sich ein besonders ausgewogenes Verhältnis zwischen Langlebigkeit und Schneidleistung des Bohrsegments ergeben.

In den Rahmen der Erfindung fällt des Weiteren **eine Bohrkrone.**

Die Bohrkrone umfasst einen, vorzugsweise röhrenförmigen, Schaft, an dessen einem Ende ein Verbindungsabschnitt zur Verbindung der Bohrkrone mit einer Werkzeugmaschine angeordnet und / oder ausgebildet ist. An dessen anderem Ende ist wenigstens eines der vorangehend beschriebenen Bohrsegmente angeordnet und / oder ausgebildet.

In den Rahmen der Erfindung fällt des Weiteren **ein Computerprogrammprodukt.** Das Computerprogrammprodukt kann einen Speicher umfassen. Im Speicher kann auf einer Rechnereinheit ausführbarer Programmcode abrufbar abgelegt sein. Das Computerprogrammprodukt, insbesondere der Programmcode, kann zur Umsetzung des vorangehend und / oder nachfolgend beschriebenen Verfahrens oder zumindest eines Teils des vorangehend und / oder nachfolgend beschriebenen Verfahrens, insbesondere zur Realisierung einer oder mehrerer der vorangehend beschriebenen Merkmale des physikalischen und / oder des angepassten Modells, eingerichtet sein. Insbesondere kann es eingerichtet sein, wenigstens einen Leistungskennwert eines ein Muster aufweisenden Bohrsegments vorauszuberechnen und / oder das Muster in Abhängigkeit von einer Vorausrechnung des Leistungskennwerts zu bestimmen. Es kann auch eingerichtet sein, insbesondere, falls der Leistungskennwert ein bestimmtes Maß erreicht oder überschreitet, ein Bohrsegment, welches wenigstens eine Schicht mit dem Muster entsprechend angeordneten Abrasivpartikeln aufweist, herzustellen und / oder die Herstellung eines solchen Bohrsegments zu steuern.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**

Fig. 1        eine Bohrkrone in einer schematischen Seitenansicht;
Fig. 2        einen Ausschnitt einer Bohrkrone mit mehreren Bohrsegmenten in einer perspektivischen Schrägansicht;
Fig. 3        ein Flussdiagramm eines Verfahrens zur Herstellung eines Bohrsegments;
Fig. 4        einen Teilaspekt einer Variante des Verfahrens gemäß Fig. 3;
Fig. 5        eine schematische Darstellung eines physikalischen Modells;
Fig. 6        eine schematische Darstellung eines Segmentmodells;
Fig. 7a-d     Abbildungen berücksichtigter Abrasivpartikel-Verschleißarten;
Fig. 8        Übersicht berücksichtigter Abrasivpartikel-Geometrien;
Fig. 9a-b     Ermittlung eines Schneidprofils und zugehörige Schneidwirkung;
Fig. 10a-b    perspektivische Darstellungen von Werkstücken sowie ermittelte Schnittkonturen;
Fig. 11       ein Muster; und
Fig. 12       ein Diagramm zu einem Leistungskennwert.

In der nachfolgenden Beschreibung der Figuren werden zur Erleichterung des Verständnisses der Erfindung für gleiche oder sich funktional entsprechende Elemente jeweils die gleichen Bezugszeichen verwendet.

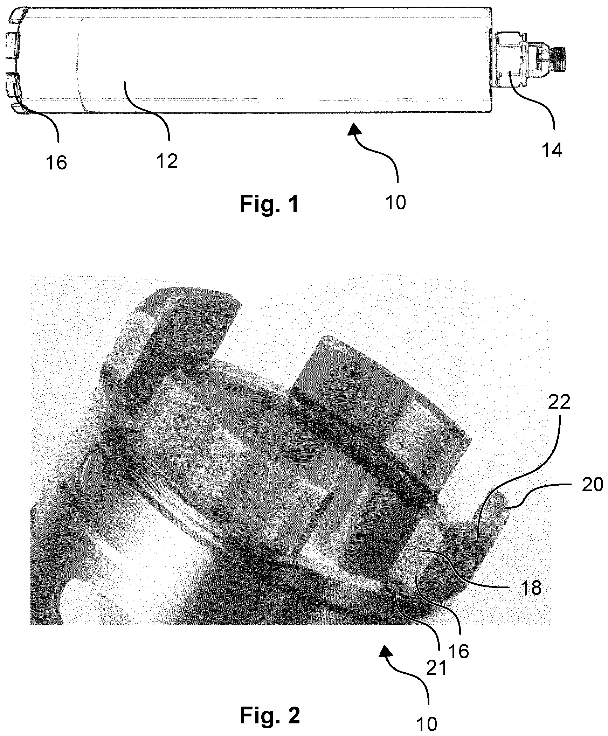

**Fig. 1** zeigt eine Bohrkrone **10,** umfassend einen röhrenförmigen Schaft **12,** an dessen einem Ende ein Verbindungsabschnitt **14** zur Verbindung der Bohrkrone 10 mit einer Werkzeugmaschine (in Fig. 1 nicht dargestellt) ausgebildet ist. An dessen anderem Ende befindet sich eine Vielzahl von Bohrsegmenten **16**, von denen vereinfachend lediglich eines mit einem Bezugszeichen versehen ist. Die Bohrsegmente 16 können an den Schaft 12 geschweißt oder gelötet sein.

**Fig. 2** zeigt einen Ausschnitt einer Bohrkrone 10 in einer perspektivischen Darstellung. Die Bohrkrone 10 weist mehrere Bohrsegmente 16 auf, von denen eines mit beispielhaft mit einem Bezugszeichen versehen ist. Die Bohrsegmente 16 sind im Wesentlichen zylindersegmentförmig. Sie weisen Schneidkanten **20** auf. Die Bohrsegmente 16 sind entlang Schweißnähten **21** an die übrige Bohrkrone 10 angeschweißt. Um die Schweißeigenschaften der Bohrsegmentes 16 zu verbessern, weisen die Bohrsegmente 16 in der Nähe der Schweißnähte 21 keine oder zumindest eine reduzierte Dichte an Abrasivpartikeln 22 auf.

Die Bohrsegmente 16 weisen ein Bindermaterial **18** auf, in das jeweils eine Vielzahl Abrasivpartikel **22** eingebunden ist. Von den Abrasivpartikeln 22 ist vereinfachend lediglich eines mit einem Bezugszeichen versehen.

Das Bindermaterial 18 kann eine Kupfer- und / oder eine Eisen-basierte Legierung aufweisen. Die Abrasivpartikel 22 sind Diamantpartikel.

Das Bohrsegment 16 weist eine Schichtstruktur auf. Insbesondere sind die Abrasivpartikel 22 innerhalb von Schichten im Bohrsegment 16 angeordnet. Innerhalb der jeweiligen Schichten bilden die jeweiligen Abrasivpartikel 22 jeweils ein Muster.

Das Bohrsegment 16 ist nach dem nachfolgend beschriebenen Verfahren hergestellt.

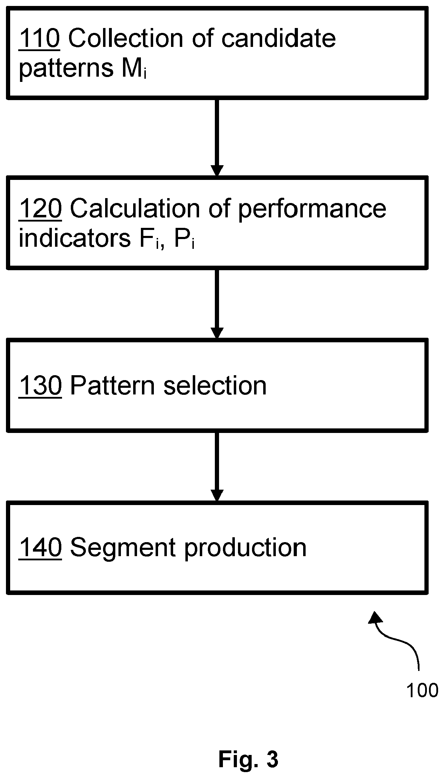

**Fig. 3** zeigt ein Verfahren **100** zur Herstellung des Bohrsegments 16. Für die Beschreibung des Verfahrens soll hier und im Weiteren angenommen werden, dass das Bohrsegment 16 dazu eingerichtet sein soll, ein aus mehreren Komponenten bestehendes Material, insbesondere Stahlbeton, zu schneiden. Dazu soll das Bohrsegment 16 im Hinblick auf die Leistungskennwerte Anpresskraft F und erforderliche mechanische Leistung P optimiert sein. Eine Optimierungsvariable besteht dabei in der Gestaltung und / oder Auswahl der durch die Abrasivpartikel 22 erzeugten Muster.

Zunächst werden in einer Kandidaten-Phase **110** mehrere als zu prüfende Muster $M_i$ als Prüfkandidaten zusammengestellt.

In einer Vorausberechnungs-Phase **120** werden für jedes der Prüfkandidaten-Muster $M_i$ des zu erstellenden Bohrsegments 16 nun die Leistungskennwerte $F_i$ und $P_i$ des das Muster vorausberechnet.

Das oder die Prüfkandidaten-Muster $M_i$ mit den besten Leistungskennwerten $F_i$ und $P_i$ werden in einer Auswahl-Phase **130** als Ergebnismuster ermittelt und ausgewählt.

In einer Produktions-Phase **140** werden dann Bohrsegment 16 hergestellt, bei denen wenigstens eine Schicht, vorzugsweise alle Schichten, wenigstens eines der in der vorangehenden Phase 130 ausgewählten Ergebnismuster aufweist.

Dazu kann zunächst ein Grünling hergestellt werden. Der Grünling kann schichtweise mithilfe einer Form aufgebaut werden. Dazu kann die Form Ausnehmungen in einer dem jeweils gewünschten Ergebnismuster entsprechenden Anordnung aufweisen. In diese Ausnehmungen können Diamanten als Abrasivpartikel 22 eingesetzt werden. Sofern das Ergebnismuster eine Orientierung der Abrasivpartikel 22 vorgibt, kann diese beim Einsetzen der Diamanten berücksichtigt werden. Anschließend können die Form und damit die Abrasivpartikel 22 auf oder in die Schicht mit Bindermaterial 18 eingebracht werden, um die Abrasivpartikel 22 in der Schicht dem Ergebnismuster entsprechend zu platzieren. Nach Aufbau einer gewünschten Anzahl von Schichten kann der Grünling je nach Bedarf gepresst, erwärmt und / oder gesintert werden.

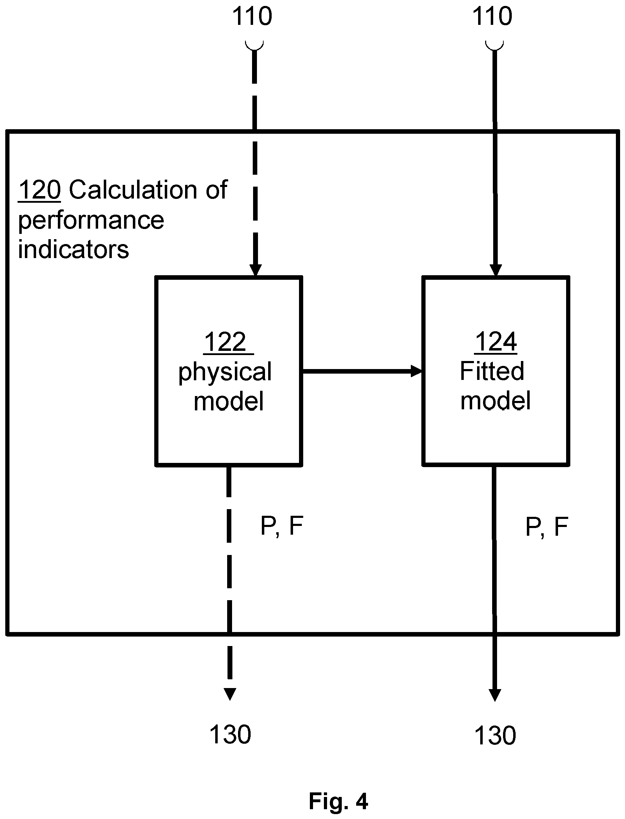

Wie in **Fig. 4** schematisch und mit Hilfe von gestrichelten Pfeilen dargestellt, kann die Vorausberechnung gemäß der Vorausberechnungs-Phase 120 auf Basis eines physikalischen Modells **122** erfolgen.

Das physikalische Modell 122 kann ein oder mehrere Einzelfaktoren, die Einfluss auf die vorauszuberechnenden Leistungskennwerte F, P nehmen können, berücksichtigen und geeignet zusammenführen, um daraus die gewünschten Leistungskennwerte F, P abzuleiten.

Aufgrund der hohen Anzahl an Abrasivpartikeln 22 und vielzähliger Anordnungsmöglichkeiten für die Abrasivpartikel 22 und damit der hohen Anzahl an Freiheitsgraden für die Muster $M_i$ kann die Ermittlung der Leistungskennwerte F, P aller Kandidaten-Muster $M_i$ jedoch teilweise zu einem erheblichen Rechenaufwand führen.

Um dennoch eine besonders große Anzahl von Kandidaten-Mustern Mi prüfen zu können und um dazu die erforderliche Rechenkapazität zu minimieren, können die Vorausberechnungen für die Kandidaten-Muster $M_i$ vereinfachend auch mit einem angepassten Modell **124** anstatt des physikalischen Modells 122 erfolgen.

Vorzugsweise kann das angepasste Modell 124 trainierbar sein; mit Hilfe des physikalischen Modells 122 kann es dann angelernt werden.

Das angepasste Modell 124 kann dazu beispielsweise eine probabilistische Regression umfassen, sodass nach Eichung des angepassten Modells 124 Vorausberechnungen erheblich schneller und insbesondere mit geringem Rechenaufwand erfolgen können. Denkbar sind alternativ oder ergänzend auch weitere trainierbare Modelle, beispielsweise auf Basis neuronaler Netze wie etwa Deep Learning-Modulen oder dergleichen. Die trainierbaren Modelle können linear oder nicht-linear sein.

Durch eine probabilistische Ausgestaltung der Regression kann eine stochastische Verteilung bestimmter Eigenschaften der Schichten bzw. Muster $M_i$ berücksichtigt werden. Beispielsweise kann bei einem Muster $M_i$, das keine bestimmte Orientierung der Abrasivpartikel 22 definiert, so dass die Abrasivpartikel 22 Orientierungen in zufällig verteilter Weise annehmen, diesen Orientierungen der Abrasivpartikel 22 eine entsprechende stochastische Verteilung zugrunde gelegt werden.

Zur Eichung des angepassten Modells 124 werden die Leistungskennwerte F, P zunächst für eine Stichprobe der Kandidaten-Muster $M_i$ mithilfe des physikalischen Modells 122 ermittelt. Mit den Kandidaten-Mustern $M_i$ als Eingangsdaten und den erhaltenen Leistungskennwerten F, P können sodann Regressionskoeffizienten und / oder weitere für das angepasste Modell 124 benötigte Modellparameter berechnet und somit das angepasste Modell 124 geeicht werden.

Leistungswerte aller übrigen Kandidaten-Muster $M_i$ können sodann durch das geeichte, angepasste Modell 124 mit geringem Rechenaufwand geschätzt werden, sodass sich Verkürzungen des Rechenaufwands um den Faktor 10 oder mehr erzielen lassen.

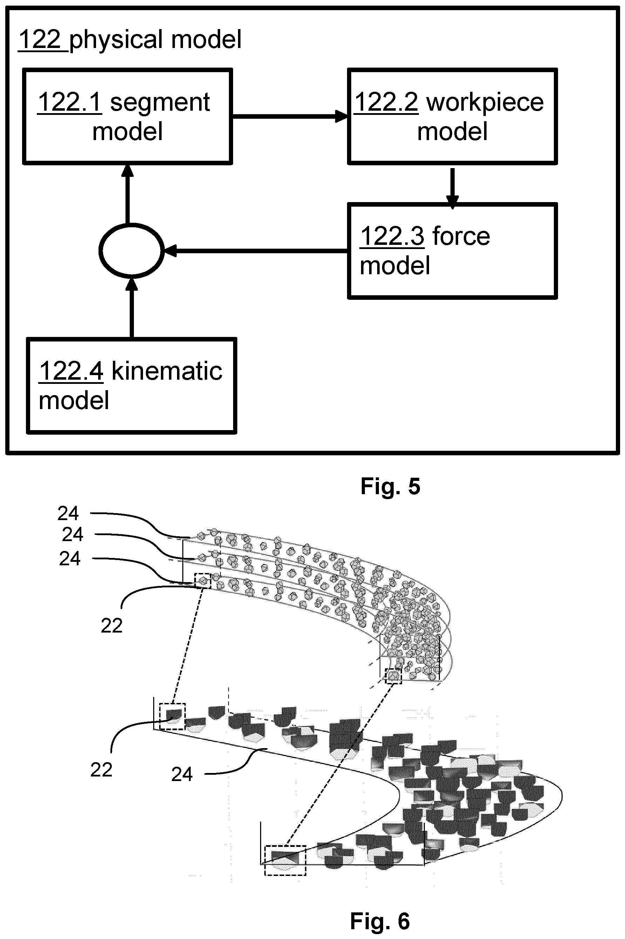

**Fig. 5** zeigt schematisch Details des physikalischen Modells 122. Dieses umfasst ein Bohrsegment-Modell **122.1,** ein Werkstück-Modell **122.2,** ein Prozesskraft-Modell **122.3** sowie ein kinematisches Modell **122.4.** Diese Modelle 122.1, 122.2, 122.3 und 122.4 interagieren miteinander.

Dabei können stochastische und / oder deterministischen Variablen verwendet werden.

Die Beschreibung des Ausführungsbeispiels geht von Stahlbeton und somit von Beton, also Zement und Agglomeraten, in Verbindung mit einer Stahlbewehrung als Material des Werkstücks aus.

Als Leistungskennwerte werden Kraft F und Eingangsleistung P ermittelt. Denkbar ist auch, andere Leistungskennwerte, insbesondere Abtragungsmenge, das Oberflächenprofil, Schnitt- und/oder Normalkräfte, Verschleißkennwerte und / oder dergleichen zu ermitteln.

Das Bohrsegment-Modell 122.1 liefert eine detaillierte geometrische Beschreibung des Abrasivpartikel-bestückten Bohrsegments 16 und insbesondere einer seiner Schichten. Das kinematische Modell 122.4 fügt diesem kinematische Daten hinzu, sodass Wechselwirkungen der Abrasivpartikel 22 mit dem Werkstückmaterial und somit Veränderungen der Werkstückoberfläche berechnet werden können. Hierauf aufbauend können mittels des Prozesskraft-Modells 122.3 Kräfte berechnet werden, sodass sich eine Berechnungsschleife jeweils abschließt. Die Kräfte können wiederum in das kinematische Modell 122.4 eingespeist und der Berechnungsprozess von Neuem gestartet werden.

Eine Vereinfachung zur Reduktion des Rechenaufwandes kann darin bestehen, dass für eine Bohrkrone 10 lediglich ein einzelnes Bohrsegment 16 vorausberechnet wird. Bei Bedarf kann dann anhand der tatsächlichen Anzahl von Bohrsegmenten 16 auf die Gesamtleistung der Bohrkrone 10 hochgerechnet werden.

## Bohrsegment-Modell 122.1

Das Bohrsegment-Modell 122.1 modelliert die Gestalt des Bohrsegments 16 und insbesondere seiner Abrasivpartikel 22.

Grundsätzlich können im Bohrsegment-Modell 122.1 eine Vielzahl Schichten, wie in **Fig. 6,** obere Hälfte, dargestellt, abgebildet werden. In der oberen Hälfte von Fig. 6 sind beispielhaft drei Schichten 24 eines Bohrsegments 16 (Fig. 1) dargestellt.

Bei einer bevorzugten Alternative wird zur weiteren Vereinfachung und Minimierung des Rechenaufwandes lediglich eine Schicht 24 (siehe Fig. 6 untere Hälfte) modelliert. Insbesondere wird dazu eine äußerste Schicht 24 modelliert, die mit dem Werkstück in Kontakt tritt und somit insbesondere als Schneid-Schicht fungiert.

Die Modellierung kann neben den Positionen und Orientierungen der Abrasivpartikel 22, von denen in Fig. 6 beispielhaft jeweils eines in der oberen und eines in der unteren Hälfte von Fig. 6 mit einem Bezugszeichen markiert sind, auch ihre Größen, mechanische Kennwerte wie kritische Druckfestigkeit, Formen, Abnutzungsgrade, Abnutzungstypen und / oder dergleichen umfassen.

Innerhalb der Schicht 24 können die Abrasivpartikel 22, hier Diamanten, entsprechend dem Muster $M_i$ angeordnet werden. In einer Schicht können beispielsweise zwischen 10 und 100, beispielsweise 25 oder 50, Abrasivpartikel 22 angeordnet sein.

Dabei können Variationen, wie weit die einzelnen Abrasivpartikel 22 aus der Schicht 24 bzw. der Oberfläche des Bohrsegments herausragen, beispielsweise im Bereich von bis zu ca. 150 $\mu$m, berücksichtigt werden.

Sofern das Muster $M_i$ eine zufällige Verteilung der Orientierungen der Abrasivpartikel 22 vorsieht, können die Orientierungen als stochastisch verteilte, z. B. normalverteilte, dreidimensionale Winkel berücksichtigt werden.

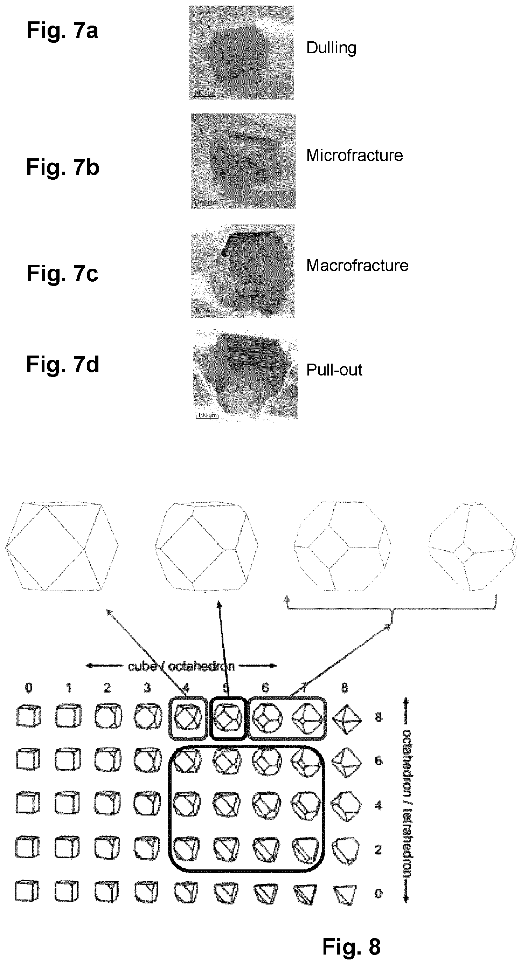

In der unteren Hälfte von Fig. 6 ist auch zu erkennen, dass für jeden einzelnen Abrasivpartikel 22 ein Partikelabnutzungsgrad und / oder ein Partikelabnutzungszustand modelliert werden kann. Berücksichtigte Abnutzungsarten können beispielsweise abrasive Abstumpfung (Fig. 7a), Mikrobrüche (Fig. 7b), Makrobrüche (Fig. 7c) sowie Partikelauszug aus dem Bindermaterial (Fig. 7d) umfassen.

Das Bohrsegment-Modell 122.1 kann auch vorsehen, unterschiedliche Ausgangsformen der Abrasivpartikel 22 zu berücksichtigen. Für den Fall diamantener Abrasivpartikel 22 zeigt **Fig. 8** hierzu Beispiele solcher Ausgangsformen.

Ferner kann vorgesehen sein, im Bohrsegment-Modell 122.1 die Größen der Abrasivpartikel 22 zu modellieren, um damit abzubilden, dass diese bei den üblichen, durch Siebung, erfolgenden Auswahlverfahren mit gewissen Variationen zu rechnen ist. Vorzugsweise kann auch die Größe und / oder eine kritische Druckfestigkeitsverteilung der Abrasivpartikel 22 als stochastische, beispielsweise normalverteilte, Größe modelliert sein bzw. werden.

Weiterhin kann das Modell berücksichtigen, dass sich selbst bei Platzierungsmethoden zur Positionierung der Abrasivpartikel 22 gewisse Ungenauigkeiten ergeben. Daher können auch die Position und / oder eine Abweichung zu einer Soll-Position als stochastische Variable modelliert sein bzw. werden.

## Abnutzung des Bohrsegments 16

Zur Modellierung des Verschleißes des Bohrsegments 16 werden analog zu Fig. 7a bis Fig. 7d die diesbezüglich genannten vier verschiedenen Verschleißarten bzw. -Verschleißgrade modelliert.

Abrasive Abstumpfung kann wie folgt modelliert werden:

$$\frac{dW}{dt} = K \cdot F_c(t) \cdot v_c \cdot e^{-\frac{B}{T_{grind}}}$$

Dabei ist $dW/dt$ eine Verschleißrate, beispielsweise in [mm/s], K ist ein Verschleißkoeffizient, $B$ ist eine dimensionslose Konstante aus der Arrhenius Gleichung und berücksichtigt die Aktivierungsenergie und die universelle Gaskonstante, $F_c$ ist eine Schnittkraft, $v_c$ ist eine Schnittgeschwindigkeit und $T_{grind}$ eine Temperatur im Schnittbereich.

Mikro- und Makrobrüche werden auf zueinander ähnliche Weisen modelliert, wobei sich die beiden Brucharten im Wesentlichen durch eine Eindringtiefe unterscheiden können.

Ein Bruch tritt auf, wenn die resultierende Spannung, die auf das Abrasivpartikel 22 wirkt, höher ist als seine eigene Druckfestigkeit. Eine versagensbedingte Spannung für spröde Materialien ohne elastische Verformung kann wie folgt modelliert werden:

$$\sigma_1 = \frac{(\sigma_T + \sigma_N) + \sqrt{(\sigma_T - \sigma_N)^2 + 4\tau^2}}{2},$$

wobei $\sigma_N$ eine Normalspannung ist, berechnet als:

$$\sigma_N = \frac{F_N}{A_\perp}$$

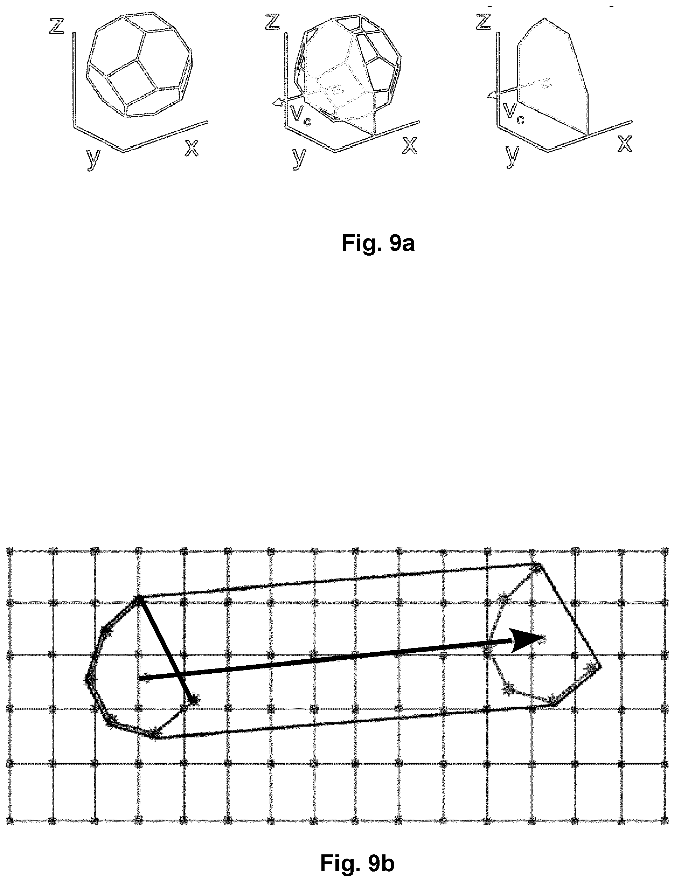

mit $F_N$ als Normalkraft und $A_\perp$ einer Projektionsfläche oder Schnittfläche orthogonale zur Schnittrichtung (siehe auch weiter unten in Bezug auf Fig. 9a) ist.

$\sigma_t$ entspricht einer Spannung in Schnittrichtung, modellierbar als:

$$\sigma_T = \frac{F_c}{A_{cut}}$$

wobei $F_c$ die Schnittkraft und $A_{cut}$ ein orthogonaler Partikelquerschnitt zur Schnittrichtung ist. $\tau_{yz}$ entspricht der Schubspannung im Abrasivpartikel und ist dargestellt durch:

$$\tau_{yz} = \frac{F_c}{A_\perp}$$

Die Richtung, in der sich der Bruch ausbreitet, ist stochastisch abhängig von der Schnitttiefe des Partikels 22 bzw. des Diamanten definiert. Sobald die Punkte der orthogonalen Ebene für die Brucherzeugung definiert wurden, erfolgt die modellierte Brucherzeugung in einer 2D Ebene (orthogonal zur Ebene in Schnittrichtung, Fig. 9a) resultierend in eine neue Abrasivpartikel Geometrie und in weiterer Folge projizierter Fläche.

Zur Modellierung des Partikelauszugs können zwei Fälle unterschieden werden.

Wenn nach einem Bruch des Partikels 22 oder aufgrund des abrasiven Verschleißes das Schneidprofil im Vergleich zu einem intakten Profil auf 30% reduziert wird, kommt es aufgrund der Verringerung der Kontaktfläche zwischen dem Bindermaterial und der Oberfläche des Partikels 22 zu einem Auszug.

Der zweite Fall berücksichtigt Verschleiß des Bindermaterials. Dazu kann eine Verschleißrate des Bindermaterials geschätzt werden. Diese beeinflusst die Schwelle bzw. kritische Kraft, ab der das Abrasivpartikel 22 ausbricht. Diese kann wie folgt modelliert werden:

$$Q = \frac{K_{mc} \cdot N \cdot L}{H \cdot A}$$

Dabei ist $K_{mc}$ der Verschleißkoeffizient, $N$ die Normalkraft, $L$ zurückgelegte Weg, $H$ die Materialhärte und $A$ die Kontaktfläche.

**Kinematisches Modell 122.4**

Das kinematische Modell 122.4 bildet die Bewegung des Bohrsegments 16 als Bewegung in einem dreidimensionalen Raum ab.

Bei Rotation der Bohrkrone 10 dreht sich das Bohrsegment 16 um eine x-Achse und verschiebt sich entlang einer Vorschubrichtung, ähnlich der Kinematik von Bohrern.

Somit lassen sich eine Schnittgeschwindigkeit $v_c$ und eine Vorschubgeschwindigkeit $v_f$ wie folgt berechnen:

$$v_c = \pi \cdot \frac{n}{60} \cdot d \, [m/s]$$

und

$$v_f = n \cdot a_e \, (2.2) \, [cm/min]$$

wobei $n$ die Anzahl der Umdrehungen der Bohrkrone 10 pro Minute ist, d ihr Durchmesser und $a_e$ eine Eindringtiefe pro Umdrehung.

Ein weiterer wichtiger Parameter des kinematischen Modells 122.4 beschreibt die Durchtrittsdauer bzw. den Zeitschritt $t_s$, mit der das Bohrsegment 16 das Werkstück mit der Materialbreite $m_w$, dem Kernbohrer-Außenradius $r_{cb}$ und der Kernbohrer-Rotationsfrequenz $f_{cb}$ durchtritt.

Dabei kann folgender Zusammenhang zugrunde gelegt werden:

$$t_s = \frac{m_w}{2\pi \cdot f_{cb} \cdot r_{cb}}$$

**Prozesskraft-Modell 122.3**

Das Prozesskraft-Modell 122.3 modelliert während des Schneidens auftretende Kräfte zwischen dem Bohrsegment 16 und dem jeweiligen Werkstück. Anhand einer angepassten Kienzle-Gleichung können die Kräfte, die während des Schneidprozesses wirken, modelliert werden:

$$F_{ci} = k_{c1.1} \cdot A_i^{m_c}$$

wobei $k_{c1.1}$ eine spezifische Schnittkraft, A eine orthogonale Schnittfläche und $m_c$ ein Werkstückmaterialkoeffizient der Schnittkraftzunahme ist. Diese Kennwerte werden auf der Grundlage der einzelnen Abrasivpartikel 22 und ihrer Wechselwirkung mit dem jeweiligen Werkstück berechnet. Die insgesamt wirkende Kraft kann durch Summation aller einzelnen Kräfte $F_{ci}$ erfolgen:

$$F_c = \sum_i^n F_{ci}$$

Die zur Schnittrichtung senkrechte Normalkraftkomponente ergibt sich aus dem Schnittkraftverhältnis μ wie folgt:

$$F_n = \frac{F_c}{\mu} \tag{10}$$

Die spezifische Schnittkraft $k_{c1.1}$, der Werkstückmaterialkoeffizient $m_c$ und das Schnittkraftverhältnis $\mu$ können experimentell, beispielsweise mittels Kratz- und Kernbohrversuchen, sowie beispielsweise durch lineare Regression ermittelt werden.

Hiermit können somit die Beträge der Kräfte ermittelt werden; die zugehörigen Kraftrichtungen können dann, wie nachfolgend erläutert, separat ermittelt werden.

**Werkstück-Modell 122.2**

Das Werkstück-Modell 122.2 modelliert die Gestalt des Werkstücks sowie seine Veränderungen durch den Schneidprozess.

Um die durch die abrasiv Abrasivpartikel 22 erzeugte Wirkung auf das Werkstück modellieren, wird zunächst für jedes einzelne Abrasivpartikel 22 ein Schneidprofil ermittelt. Wie in **Fig. 9a** abgebildet, wird das Schneidprofil aus der Projektionsfläche des Partikels 22 parallel zur Richtung der Schnittgeschwindigkeit $v_c$ ermittelt.

Die Oberfläche des zu bearbeitenden Werkstücks, im Beispielfall also eine Beton- oder StahlOberfläche, wird durch Netzpunkte modelliert.

Innerhalb des Zeitschritts $t_s$ wird das ermittelte Schneidprofil mit der definierten Kinematik über das Netz, beispielsweise entlang dem in Fig. 9a abgebildeten Pfeil, geführt. Entlang der überfahrenen Netzpunkte wird die Oberfläche entsprechend dem Schneidprofil verändert, sodass sich ein aktualisierter Oberflächenverlauf des bearbeiteten Werkstücks ergibt.

Dieser Ansatz wandelt ein dreidimensionales Korn in ein zweidimensionales Korn um, was eine signifikante Reduzierung der Simulationszeit für das Modell mit sich bringt.

Durch den Vergleich des Netzes vor und nach dem Zeitschritt $t_s$ ist es zudem möglich, das entnommene Werkstückmaterialvolumen zu ermitteln.

Mit den ermittelten Informationen zum Schneidprofil und dem abgetragenen Volumen lässt sich auch die Richtung der Schnittkraft ermitteln:
Jede Fläche eines Partikels 22 ist durch Normalenvektoren $\vec{n_l}$ charakterisierbar, wie sich aus der jeweiligen Gestalt des Partikels 22 ergeben.

Aus diesen Normalenvektoren $\vec{n_l}$ lassen sich dann die Richtung der effektiven Gesamtkraft und damit der Gesamtkraftvektor durch Summation ableiten:

$$\vec{F} = \sum_{i=1}^{n} \frac{V_i}{V_t} \cdot \vec{n_i}$$

Dabei entspricht n der Gesamtzahl der Flächen in dem betreffenden Abrasivpartikel 22, $V_i$ entsprechen den von den jeweiligen Flächen extrahierte Volumen; $V_t$ entspricht dem gesamten in diesem Zeitschritt $t_s$ entnommenen Volumen. Gesamtvolumen.

Denkbar ist, noch weitere Effekte zu berücksichtigen. Denkbar ist beispielsweise, durch Integration von thermischen und mechanischen Einflüssen, wie Schnitttemperatur, Reibung, elastisches Materialverhalten, Rissausbreitung oder dergleichen, weiter zu verbessern.

Mit den hier dargestellten Vereinfachungen hängt das Volumen des entfernten Werkstückmaterials vom Bereich der Wechselwirkung zwischen dem Netz bzw. dem Werkstück und dem Schneidprofil sowie der zurückgelegten Wegstrecke ab. Somit entspricht die modellierte Kerbung des Werkstücks einem Negativ des Schneidprofils. Die Überlagerung der durch die Kerbung modellierten Rillen führt somit zu einer jeweiligen Schnittkontur mit entsprechender Oberflächenrauheit.

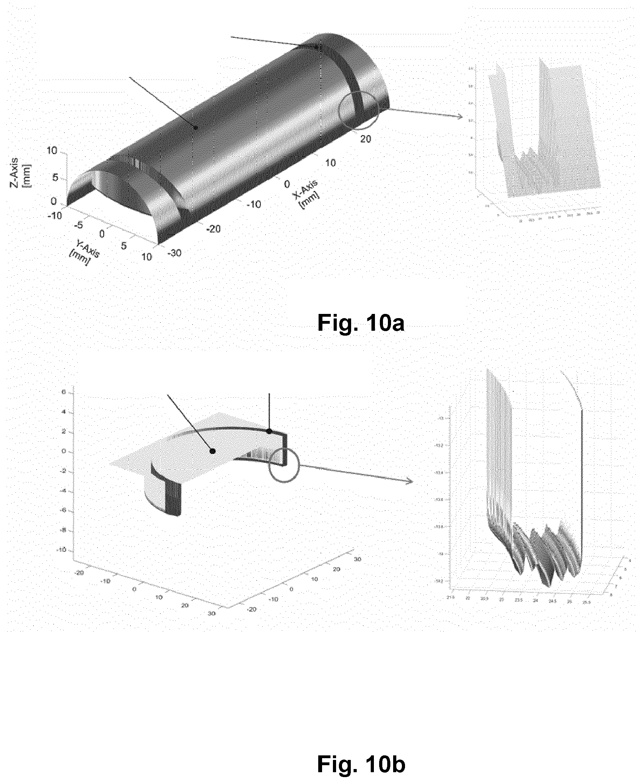

**Fig. 10a,** für eine Stahlarmierung, und **Fig. 10b,** für ein Betonelement, zeigen jeweils Werkstücke mit modellierten, sich aus dem Schneidprozess ergebenden Schnittkonturen.

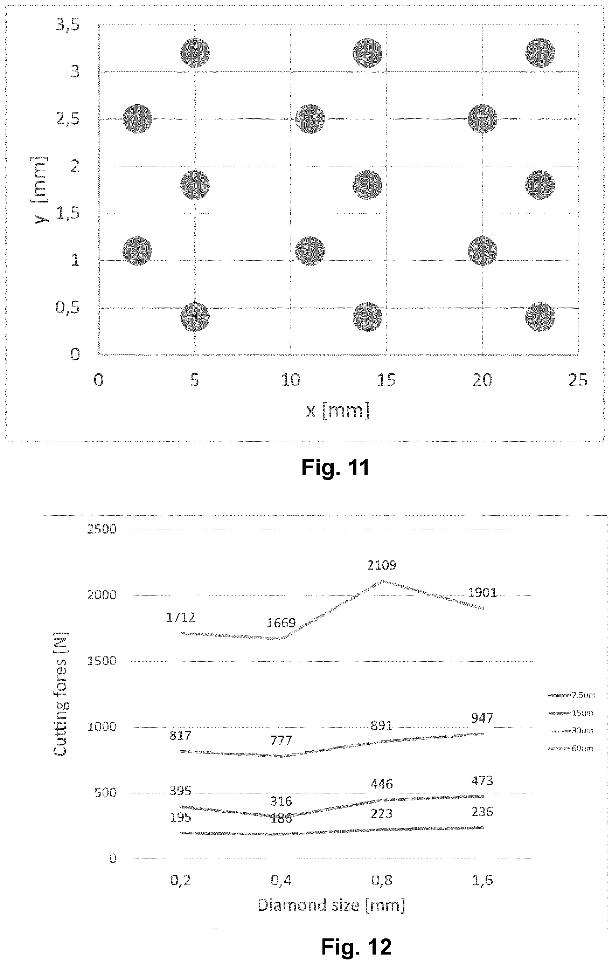

**Fig. 11** zeigt in einer schematischen Darstellung ein Muster für das als Diamantbohrsegment ausgebildete Bohrsegment 16.

Das Muster weist abwechselnd 3- bzw. 2-fach besetzte Spalten von Diamant-Abrasivpartikeln 22 auf.

Zu dem Bohrsegment 16 mit einem solchen Muster wurden Messungen von Leistungskennwerten wie Kräften, Drehmomenten usw. durchgeführt.

Die experimentell gewonnenen Messergebnissen wurden mit durch ein physikalisches Modell entsprechend dem vorangehend beschriebenen physikalischen Modell gewonnenen Leistungskennwerten verglichen. Insgesamt zeigte sich eine sehr gute Übereinstimmung.

Unter Variation verschiedener Parameter des Musters, beispielsweise der Größen der Diamant-Abrasivpartikel 22, wurden insgesamt beispielhaft 192 abgewandelte Muster simuliert.

Es konnte ein Muster mit um ca. 20% niedrigeren Kräften ermittelt werden.

Ein Probemuster kann dabei als identisch oder zumindest im Wesentlichen identisch zu einem Vergleichsmuster angesehen werden, wenn Abstände zwischen Abrasivpartikeln 22 des Probemusters höchstens um 10%, insbesondere höchstens um 5%, besonders bevorzugt höchstens um 1%, von entsprechenden Abständen des Probemusters abweichen. Alternativ oder ergänzend können die beiden Muster als zueinander identisch oder zumindest im Wesentlichen identisch angesehen werden, wenn ihre Anzahlen an Abrasivpartikeln 22 höchstens um 20%, insbesondere höchstens um 10 %, besonders bevorzugt um höchstens 5%, ganz besonders bevorzugt um höchstens 1%, voneinander abweichen. Entsprechend einer weiteren denkbaren Definition einer Mustergleichheit können alternativ oder ergänzend auch Eigenschaften der Abrasivpartikel 22 mit in Betracht gezogen werden. Beispielsweise können das Probemuster und das Vergleichsmuster als identisch oder im Wesentlichen identisch angesehen werden, wenn die durchschnittlichen Partikeldurchmesser und / oder Siebgrößen zur größenmäßigen Siebung der Abrasivpartikel 22 sich höchstens um 20%, insbesondere höchstens um 10 %, bevorzugt höchstens um 5 %, unterscheiden. Ebenso ist denkbar, als Eigenschaft der Abrasivpartikel 22 das Auftreten und / oder ein Mengenanteil von Abrasivpartikeln 22 einer bestimmten Form heranzuziehen.

Der Vergleich von Mustern von Bohrsegmenten 16 kann sich vorzugsweise auf die Anordnung der Abrasivpartikel 22 in den jeweiligen Grünlingen der jeweiligen Bohrsegmente 16 beziehen.

Allgemein ist denkbar, als Eigenschaften der Muster beispielsweise

- eine durchschnittliche, eine häufigste und / oder eine maximale Partikelgröße, beispielsweise einen maximalen Durchmesser der Abrasivpartikel, beispielsweise im Bereich von 0,1 bis 3 mm, insbesondere Durchmesser kleiner als 0,5 mm oder größer als 1 mm,
- eine Anzahl von Lagen, insbesondere in Bezug auf Fig. 11 eine Anzahl von Zeilen, beispielsweise im zwischen 1 und 20, insbesondere zwischen 3 und 8,
- ein Konzentrationsverhältnis zwischen einem von den Abrasivpartikeln 22 besetzten Volumen und / oder einem von diesen besetzten Flächenanteil im Verhältnis zum entsprechenden Volumen bzw. dem entsprechenden Flächenanteil des Bindermaterials des Bohrsegments 16, beispielsweise im Bereich zwischen 20 % und 80 % Abrasivpartikel 22 zu Bindermaterial,
- wenigstens eine Geometrie der Abrasivpartikel 22, bspw. die am häufigsten auftretende Geometrie, insbesondere vor erstmaliger Verwendung des Bohrsegments 16 und / oder
- wenigstens eine Ausrichtung der Abrasivpartikel 22, bspw. die am häufigsten auftretende Ausrichtung, insbesondere vor erstmaliger Verwendung des Bohrsegments 16, zu betrachten.

**Fig. 12** zeigt ein Diagramm eines Teils der aus den 192 Simulationen gewonnenen Daten. Insbesondere sind für unterschiedliche Schnitttiefen zwischen 7,5 $\mu$m und 60 $\mu$m und unterschiedliche Korngrößen der Diamant-Abrasivpartikel 22 jeweils resultierende Schnittkräfte abgebildet.

Zu erkennen ist, dass sich komplexe Abhängigkeitsverhältnisse ergeben haben, die sich insbesondere bei tiefen Schnitttiefen besonders stark auswirkten.

In dem in Fig. 12 dargestellten Beispiel ergab sich beispielsweise, dass für Schnitttiefen von ca. 60 $\mu$m eine Partikelgröße der Abrasivpartikel 22 von ca. 0,4 mm zu ca. 20 %, insbesondere entsprechend 1669 / 2109, niedrigeren erforderlichen Schnittkräften führen kann als eine Partikelgröße von ca. 0,8 mm.

Allgemein ergaben sich somit besonders geringe erforderliche Kräfte bei Bohrsegmenten 16 mit 5 Zeilen (siehe Fig. 11) und mit Diamantpartikeln mit einem maximalen Durchmesser im Bereich von 0,3 mm bis 0,6 mm, insbesondere 0,4 mm.

**Bezugszeichenliste**

10 Bohrkrone
12 Schaft
14 Verbindungsabschnitt
16 Bohrsegment
18 Bindermaterial
20 Schneidkante
21 Schweißnaht
22 Abrasivpartikel
24 Schicht
100 Verfahren
110 Kandidaten-Phase
120 Vorausberechnungs-Phase
122 Physikalisches Modell
122.1 Bohrsegment-Modell
122.2 Werkstück-Modell
122.3 Prozesskraft-Modell
122.4 Kinematisches Modell
124 Angepasstes Modell
130 Auswahl-Phase
140 Produktions-Phase

**Patentansprüche**

1. Verfahren (100) zur Herstellung eines Bohrsegments (16) für eine Bohrkrone (10), insbesondere für eine Bohrkrone (10) zur Bearbeitung von Stahlbeton, wobei das Bohrsegment (16) wenigstens eine Schicht (24) mit einer Vielzahl von Abrasivpartikeln (22) aufweist, wobei die Abrasivpartikel (22) ein Muster innerhalb der Schicht (24) bilden, **dadurch gekennzeichnet,**
**dass** zunächst wenigstens ein Leistungskennwert des das Muster aufweisenden Bohrsegments (16) vorausberechnet wird und / oder das Muster in Abhängigkeit von einer Vorausrechnung des Leistungskennwerts bestimmt wird und, insbesondere, falls der Leistungskennwert ein bestimmtes Maß erreicht oder überschreitet, ein Bohrsegment (16), welches wenigstens eine Schicht (24) mit dem Muster entsprechend angeordneten Abrasivpartikeln (22) aufweist, hergestellt wird.

2. Verfahren nach dem vorhergehenden Anspruch, **dadurch gekennzeichnet, dass** das Muster wenigstens zwei identische oder zumindest im Wesentlichen identische Teilbereiche aufweist, die voneinander beabstandet sind.

3. Verfahren nach einem der vorhergehenden Ansprüche, **dadurch gekennzeichnet, dass** eine Veränderung eines durch das Bohrsegment (16) zu bearbeitenden Werkstücks, das aus wenigstens einem Material ausgebildet ist, vorausberechnet wird.

4. Verfahren nach einem der vorhergehenden Ansprüche, **dadurch gekennzeichnet, dass** das zu bearbeitende Werkstück wenigstens zwei Materialien, insbesondere ein Gestein und ein Metall, aufweist.

5. Verfahren nach einem der vorhergehenden Ansprüche, **dadurch gekennzeichnet, dass** zur Vorausrechnung zunächst ein maschinell-lernendes Modul trainiert wird.

6. Verfahren nach einem der vorhergehenden Ansprüche, **dadurch gekennzeichnet, dass** eine probabilistische Regression durchgeführt wird.

7. Verfahren nach einem der vorhergehenden Ansprüche, **dadurch gekennzeichnet, dass** auf Basis einer Optimierungsrechnung ein Optimum des Leistungskennwertes und / oder ein zu dem Optimum des Leistungskennwertes zugehöriges Muster bestimmt werden.

8. Verfahren nach einem der vorhergehenden Ansprüche, **dadurch gekennzeichnet, dass** in mehrere Schichten (24) aneinandergereiht, insbesondere gestapelt, werden, um das Bohrsegment (16) oder einen Rohkörper des Bohrsegments (10) zu bilden.

9. Verfahren nach einem der vorhergehenden Ansprüche, **dadurch gekennzeichnet, dass** der wenigstens eine Leistungskennwert einen Verschleißkennwert umfasst.

10. Verfahren nach einem der vorhergehenden Ansprüche, **dadurch gekennzeichnet, dass** der wenigstens eine Leistungskennwert einen Schneidleistungskennwert umfasst.

11. Verfahren nach einem der vorhergehenden Ansprüche, **dadurch gekennzeichnet, dass** die Abrasivpartikel (22) Kohlenstoff, insbesondere Diamant, Graphen und / oder Kohlenstoffnanoröhren wie beispielsweise in Form von Aggregierten Diamant-Nanostäbchen und / oder Graphen, Wolframkarbid, Wolframborid und / oder ein Bornitrid aufweisen.

12. **Bohrsegment (16) für eine Bohrkrone (10),** umfassend in ein Bindermaterial (18) aufgenommene Abrasivpartikel (22), hergestellt nach einem Verfahren (10) gemäß einem der vorhergehenden Ansprüche.

13. Bohrsegment nach dem vorhergehenden Anspruch, **dadurch gekennzeichnet, dass** die Abrasivpartikel (22) in wenigstens einer Schicht (24) entsprechend einem Muster aus wenigstens zwei identischen, voneinander beabstandeten Teilbereichen ausgebildet ist.

14. Bohrsegment nach dem vorhergehenden Anspruch, **dadurch gekennzeichnet, dass** der Teilbereich wenigstens eine polygone, insbesondere eine dreieckige und / oder eine viereckige, Anordnung von Abrasivpartikeln (22) aufweist.

15. **Bohrkrone (10),** umfassend einen, vorzugsweise röhrenförmigen, Schaft (12), an dessen einem Ende ein Verbindungsabschnitt (14) zur Verbindung der Bohrkrone (10) mit einer Werkzeugmaschine angeordnet und / oder ausgebildet ist, und an dessen anderem Ende wenigstens ein Bohrsegment (16) nach einem der Ansprüche 10 bis 12 angeordnet und / oder ausgebildet ist.

**Fig. 1**

16    12    10    14

22

20

18

21    16

**Fig. 2**

10

110 Collection of candidate patterns $M_i$

120 Calculation of performance indicators $F_i$, $P_i$

130 Pattern selection

140 Segment production

100

**Fig. 3**

110                    110

**120** Calculation of
performance
indicators

| **122**<br>physical<br>model | → | **124**<br>Fitted<br>model |

P, F                   P, F

130                    130

**Fig. 4**

Fig. 5

Fig. 6

**Fig. 7a** — Dulling

**Fig. 7b** — Microfracture

**Fig. 7c** — Macrofracture

**Fig. 7d** — Pull-out

**Fig. 8**

**Fig. 9a**

**Fig. 9b**

**Fig. 10a**

**Fig. 10b**

Fig. 11

Fig. 12

Europäisches Patentamt
European Patent Office
Office européen des brevets

## EUROPÄISCHER RECHERCHENBERICHT

Nummer der Anmeldung

EP 22 17 2695

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2004/112359 A1 (SUNG CHIEN-MIN [TW]) 17. Juni 2004 (2004-06-17) | 1-4,6-15 | INV. B28D1/04 |
| A | * Absätze [0003], [0052] – [0055], [0138], [0139], [0145] – [0150] * * Abbildungen 7A,8,9,15,16,17 * | 5 | B23D65/00 G06F30/20 B23D59/00 |
| X | EP 3 928 896 A1 (HILTI AG [LI]) 29. Dezember 2021 (2021-12-29) | 1-4,6-15 | |
| A | * Absätze [0003], [0007], [0037], [0039], [0041] – [0003], [0047] – [0049], [0051], [0055] – [0058] * * Abbildungen 1A,5A-7A * | 5 | |
| A | US 5 203 880 A (TSELESIN NAUM N [US]) 20. April 1993 (1993-04-20) * Spalte 1, Zeilen 6-10,38-45 * * Abbildungen 1,2 * | 1-15 | |
| A | EP 3 037 201 A1 (HILTI AG [LI]) 29. Juni 2016 (2016-06-29) * Absätze [0004], [0033] * * Abbildungen 2A,2B,2C * | 1-15 | RECHERCHIERTE SACHGEBIETE (IPC) |
| A | WO 2005/014243 A2 (EHWA DIAMOND IND CO LTD [KR]; GENERAL TOOL INC [US] ET AL.) 17. Februar 2005 (2005-02-17) * Absätze [0013], [0045] * * Abbildungen * | 1-15 | B28D B23D G06F |

Der vorliegende Recherchenbericht wurde für alle Patentansprüche erstellt

| Recherchenort | Abschlußdatum der Recherche | Prüfer |
|---|---|---|
| Den Haag | 25. Oktober 2022 | Chariot, David |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 17 2695

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-10-2022

| Im Recherchenbericht angeführtes Patentdokument | Datum der Veröffentlichung | Mitglied(er) der Patentfamilie | Datum der Veröffentlichung |
|---|---|---|---|
| US 2004112359 A1 | 17-06-2004 | KEINE | |
| EP 3928896 A1 | 29-12-2021 | EP 3928896 A1 | 29-12-2021 |
| | | WO 2021259654 A1 | 30-12-2021 |
| US 5203880 A | 20-04-1993 | KEINE | |
| EP 3037201 A1 | 29-06-2016 | AU 2015371098 A1 | 13-07-2017 |
| | | BR 112017012774 A2 | 02-01-2018 |
| | | CN 107107223 A | 29-08-2017 |
| | | EP 3037201 A1 | 29-06-2016 |
| | | EP 3237139 A1 | 01-11-2017 |
| | | KR 20170093981 A | 16-08-2017 |
| | | RU 2667114 C1 | 14-09-2018 |
| | | US 2017361388 A1 | 21-12-2017 |
| | | WO 2016102523 A1 | 30-06-2016 |
| WO 2005014243 A2 | 17-02-2005 | BR PI0406201 A | 09-08-2005 |
| | | CA 2500192 A1 | 17-02-2005 |
| | | CN 1798625 A | 05-07-2006 |
| | | EP 1654096 A2 | 10-05-2006 |
| | | JP 4372756 B2 | 25-11-2009 |
| | | JP 2006515807 A | 08-06-2006 |
| | | KR 20050017945 A | 23-02-2005 |
| | | MX PA05003311 A | 05-07-2005 |
| | | WO 2005014243 A2 | 17-02-2005 |

EPO FORM P0461

Für nähere Einzelheiten zu diesem Anhang : siehe Amtsblatt des Europäischen Patentamts, Nr.12/82